# EUROPÄISCHE PATENTSCHRIFT

(11) **EP 3 182 798 B1**
(45) Veröffentlichungstag und Bekanntmachung des Hinweises auf die Patenterteilung: **31.03.2021**
(21) Anmeldenummer: 15201322.3
(22) Anmeldetag: 18.12.2015
(51) Int. Cl.: H05B 6/64

(54) **MIKROWELLENGERÄT**
MICROWAVE DEVICE
APPAREIL A MICRO-ONDES

(43) Veröffentlichungstag der Anmeldung: 21.06.2017
(73) Patentinhaber: Taste & Tech s.r.o., 81108 Bratislava (SK)
(72) Erfinder: LINN, Horst, 92275 Hirschbach (DE); IMENOKHOYEV, Ivan, 92237 Sulzbach-Rosenberg (DE); KORNAUTH, Joachim, 1130 Wien (AT)
(74) Vertreter: Grünecker Patent- und Rechtsanwälte PartG mbB

(56) Entgegenhaltungen:
- EP-A1- 0 190 430
- EP-A1- 2 854 478
- WO-A1-99/52327
- WO-A1-2006/128212
- WO-A1-2013/046718
- WO-A2-2004/046628
- JP-A- H0 973 981
- US-A- 3 745 291
- US-A1- 2015 093 308

## Beschreibung

Die Erfindung betrifft ein Mikrowellengerät für innerhalb einer kurzen Zeitspanne zu erwärmendes, insbesondere aufzutauendes Gut, insbesondere Nahrungsmittel-Gut.

Aus der DE 197 38 882 C1 ist ein Mikrowellen-Durchlaufofen bekannt, der Ofenmodule aufweist, die in einer Reihe hintereinander angeordnet sind. Jedes Ofenmodul weist einen zylindrischen Gehäusemantel auf. Am jeweiligen Gehäusemantel ist eine Mikrowellen-Strahlenquelle angebracht. Die Mikrowellen-Strahlenquellen der in einer Reihe hintereinander angeordneten Ofenmodule sind in Umfangsrichtung vorzugsweise um den selben Winkel versetzt vorgesehen. Die Mikrowellen-Strahlenquelle steht vom zugehörigen Ofenmodul radial weg.

WO 2006/128212 A1 betrifft eine Dipolantenne zum Verstärken eines Mikrowellenfeldes in einer Nahrungsmittelheizvorrichtung .

JP H09 73981 A betrifft eine Hochfrequenzheizvorrichtung mit zwei gleich geformten Wellenleitern, die jeweils zwei Hochfrequenzoszillatoren mit einer Heizkammer verbinden, und einem Drehtisch, auf dem ein zu erwärmendes Objekt angeordnet ist,

US 3 745 291 A betrifft das Erwärmen von Artikeln unter Verwendung von Hochfrequenzenergie im Mikrowellenbereich des elektromagnetischen Spektrums und insbesondere von Artikeln die eine inhärente schlechte Wärmeleitung aufweisen, wie beispielsweise pneumatische Gummireifen.

WO 2004/046628 A2 betrifft eine Struktur eines Trockners für Haushaltsprodukte, der Mikrowellen bestrahlt, während eine freie Patrone angebracht und gedreht wird und diese wirksam erwärmt und trocknet, und ein Verfahren zur Steuerung des Trocknungsvorgangs.

EP 2 854 478 A1 betrifft ein Mikrowellen-Heizsystem, das eine Schüssel, eine Kuppel, die so an die Schüssel angepasst werden kann, dass durch die Schüssel und die Kuppel ein Volumen gebildet wird, und eine Rotorvorrichtung umfasst, die so angepasst ist, dass sie mindestens ein Reaktionsgefäß trägt und drehbar von der Schüssel getragen wird.

US 2015/093308 A1 betrifft eine Vorrichtung zur drehbaren Lagerung mindestens eines Reaktionsgefäßes in einem Mikrowellenheizgerät.

WO 2013/046718 A1 betrifft ein Hochfrequenz-Heizgerät mit elektrothermischer Heizvorrichtung.

EP 0 190 430 A1 bezieht sich auf ein Verfahren und eine Vorrichtung zum Erhitzen von Lebensmitteln.
Der Erfindung liegt die Aufgabe zugrunde, ein Mikrowellengerät der eingangs genannten Art zu schaffen, mit dem es innerhalb einer kurzen Zeitspanne von bspw. ≤ 1 Minute möglich ist, essbares Gut, insbesondere Nahrungsmittel-Gut, zu erwärmen, insbesondere tiefgekühltes, gefrorenes Gut aufzutauen und essbar zu machen.

Diese Aufgabe wird erfindungsgemäß durch die Merkmale des Anspruches 1, d.h. dadurch gelöst, dass das Mikrowellengerät ein Ofengehäuse aufweist, an dessen Gehäusemantel wenigstens eine Mikrowellen-Strahlenquelle mittels eines Mikrowellen-Kopplungselementes angekoppelt ist, wobei das Mikrowellen-Kopplungselement vom Gehäusemantel in Umfangsrichtung verteilt wegsteht, und im Ofengehäuse mindestens eine Gut-Halteeinrichtung für das Gut vorgesehen ist, die mittels einer Antriebseinrichtung um eine zentrale Achse drehbar ist, wobei die mindestens eine Gut-Halteeinrichtung von einem Drehteller gebildet ist, der zum positionsgenauen Halten des zu erwärmenden, insbesondere aufzutauenden Guts vorgesehen ist.

Bei dem erfindungsgemäßen Mikrowellengerät können an den Gehäusemantel bspw. zwei, drei oder vier Mikrowellen-Strahlenquellen mittels zugehöriger Mikrowellen-Kopplungselemente gleichmäßig verteilt angekoppelt sein, so dass sich im Inneren des zylindrischen Ofengehäuses eine gleichmäßige Verteilung der Mikrowellen bei einer optimalen Verwirbelung des Mikrowellenfeldes ergibt.

Im Ofengehäuse können mehr als eine Gut-Halteeinrichtung für zu erwärmendes, insbesondere aufzutauendes Gut vorgesehen sein, die voneinander axial beabstandet sind. Vorzugsweise ist im Ofengehäuse nur eine einzige Gut-Halteeinrichtung für das zu erwärmende, insbesondere aufzutauende Gut vorgesehen, die im Ofengehäuse axial mittig angeordnet und mittels der Antriebseinrichtung um die zentrale Drehachse drehbar ist.

Zweckmäßig kann es sein, wenn der Gehäusemantel des Ofengehäuses zum Verhindern einer Kondenswasserbildung eine Heizeinrichtung aufweist. Die Heizeinrichtung kann von einer elektrischen Widerstandsheizung gebildet sein, die den Gehäusemantel umgibt. Desgleichen ist es möglich, dass der Gehäusemantel zumindest teilweise aus einem Material besteht, das unter Mikrowellen-Einfluss einen derartigen Wirbelstromverlust aufweist, dass eine Selbsterwärmung bewirkt wird.

Bei dem erfindungsgemäßen Mikrowellengerät hat es sich als zweckmäßig erwiesen, wenn der Drehteller zum Bestücken mit zu erwärmendem, insbesondere aufzutauendem Gut aus dem Ofengehäuse entnehmbar ist, so dass der Drehteller von außerhalb des Mikrowellengerätes mit zu erwärmendem, insbesondere aufzutauendem Gut bestückt und im bestückten Zustand in das Mikrowellengerät eingesetzt werden kann.

Der Drehteller ist mit der Antriebseinrichtung vorzugsweise Drehmoment übertragend verbindbar. Das kann bspw. durch eine formschlüssige Verbindung, wie eine Feder-Nut-Verbindung, eine Rastzapfen-Verbindung o.dgl., zwischen dem Drehteller und der Antriebseinrichtung realisiert sein.

Die jeweilige Mikrowellen-Kopplungseinrichtung ist vorzugsweise von einem Hohlleiter gebildet. Der jeweilige Hohlleiter mündet mit seinem von der zugehörigen Mikrowellen-Strahlenquelle entfernten Ende vorzugsweise tangential in den Gehäusemantel des zylindrischen Ofengehäuses ein.

Der Drehteller ist zweckmäßigerweise mit Gut-Haltemitteln ausgebildet, die entlang mindestens eines zur zentralen Achse konzentrischen Teilkreises äquidistant beabstandet vorgesehen sind. Die Gut-Haltemittel können von Löchern, Ausnehmungen, Aussparungen, Schlaufenelementen, Klemmelementen, o.dgl. gebildet sein.

Der Drehteller kann bspw. vollflächig scheibenförmig mit den Löchern und/oder Ausnehmungen und/oder Aussparungen ausgebildet sein. Eine andere Möglichkeit besteht darin, dass der Drehteller zur Gewichtsreduktion als Steg- oder Rippengebilde mit entsprechenden Löchern, Schlaufenelementen und/oder Klemmelementen gestaltet ist, die durch Steg- oder Rippenränder begrenzt d.h. gebildet sind.

Der Drehteller kann derart eingerichtet sein, dass das zu erwärmende Gut in eine Bewegung versetzt wird, die nicht eine Rotation um die zentralen Achse darstellt. Diese Vorrichtung kann beispielsweise durch ein Getriebe realisiert sein, das die am Drehteller angeordneten Gut-Haltemittel um von der zentralen Achse abweichende Achsen bewegt.

Die Gut-Haltemittel sind im Drehteller vorzugsweise entlang mindestens eines zur zentralen Achse konzentrischen Teilkreises gleichmäßig beabstandet vorgesehen. Die im Drehteller ausgebildeten Gut-Haltemittel besitzen lichte Abmessungen, die an das zu erwärmende, insbesondere aufzutauende Gut derartig angepasst sind, dass das Gut, insbesondere Nahrungsmittel-Gut, sich axial definiert durch den Drehteller erstreckt und vom Drehteller definiert, positionsgenau und zuverlässig gehalten wird.

Vorteilhaft kann es sein, wenn die Gut-Haltemittel mit voneinander beabstandeten, partiellen Kontaktflächen ausgebildet sind, um zwischen dem Drehteller und dem zu erwärmenden, insbesondere aufzutauenden Gut eine Ableitung von Dampf und/oder Feuchtigkeit zu ermöglichen. Die partiellen Kontaktflächen können bspw. dadurch realisiert sein, dass der Rand der z.B. durch Löcher gebildeten Gut-Haltemittel gewellt, gezahnt, o.dgl. gestaltet ist.

Der Drehteller besteht vorzugsweise aus einem Mikrowellen-transparenten Material oder aus einem Hybrid, d.h. aus Teilen, die aus einem Mikrowellen leicht ankoppelndem Material bestehen.

Im Drehteller können entlang des mindestens einen Teilkreises bspw. drei bis neun Gut-Haltemittel äquidistant vorgesehen sein.

Zweckmäßig ist es, wenn im Ofengehäuse zum Sammeln von Feuchtigkeit und/oder Schmutzpartikeln eine Sammeleinrichtung aus Mikrowellen-durchlässigem Material herausnehmbar vorgesehen ist. Die Sammeleinrichtung kann nach dem Herausnehmen aus dem Ofengehäuse manuell oder mit Hilfe einer Geschirrspülmaschine gereinigt, d.h. gewaschen werden.

Bei dem erfindungsgemäßen Mikrowellengerät ist die Antriebseinrichtung für die mindestens eine Halteeinrichtung vorzugsweise im Bereich des Bodens des Ofengehäuses angeordnet. Der Boden des Ofengehäuses kann mit einer zentralen kappenartigen Aufwölbung ausgebildet sein, durch die unterseitig ein Hohlraum bestimmt ist, in dem die von einem Motor gebildete Antriebseinrichtung vorgesehen ist.

Die Antriebseinrichtung kann von einem Mikrowellen-reflektierenden Kappenelement umgeben sein, das unbeweglich vorgesehen ist. Bei einer solchen Ausbildung kann das Kappenelement mit einer glatten Oberfläche gestaltet sein. Vorteilhaft kann es jedoch sein, wenn das Kappenelement um die zentrale Achse drehbar vorgesehen und zur zerstreuenden Mikrowellen-Reflexion mit einer nicht glatten, bspw. gerippten, genoppten, gewellten und/oder eingedellten Oberfläche ausgebildet ist. Durch eine solche Ausbildung der zuletzt genannten Art ergibt sich der Vorteil, dass die Mikrowellen an dem Kappenelement nicht nur reflektiert sondern außerdem auch zerstreut werden, so dass die Wirkung der Mikrowellen auf das zu erwärmende, insbesondere aufzutauende Gut, insbesondere Nahrungsmittel-Gut weiter verbessert, d.h. optimiert wird.

Mit Hilfe des Mikrowellen-reflektierenden Kappenelementes wird das vom Drehteller definiert, positionsgenau gehaltene Gut nicht nur radial außenseitig sondern mittels des Mikrowellen-reflektierenden Kappenelementes auch an seiner radialen Innenseite mit Mikrowellen beaufschlagt, so dass sich eine gleichmäßige Einwirkung der Mikrowellen auf das Gut und somit optimale Erwärmungsinsbesondere Auftau-Eigenschaften für das Gut ergeben.

Erfindungsgemäß kann das Ofengehäuse zylindrisch ausgebildet sein und einen Deckel mit einer Schutzeinrichtung gegen Leckstrahlung aufweisen. Die Schutzeinrichtung kann in Abhängigkeit von der jeweiligen Ofenbeladung bspw. eine λ/4- oder λ/2-Drossel bilden.

Wenn im Folgenden von einem zylindrischen Ofengehäuse bzw. einem zylindrischen Gehäusemantel die Rede ist, versteht es sich, dass nicht nur ein kreisrundes glattes Grundflächen-Profil gemeint ist, sondern dass das Grundflächen-Profil auch mehreckig glatt oder wellig gestaltet sein kann.

Um im zylindrischen Ofengehäuse entstehende Feuchtigkeit an dem zu erwärmenden, insbesondere aufzutauenden Gut nicht wirksam werden zu lassen, kann es zweckmäßig sein, wenn der Gehäuse-Deckel eine Absaugeinrichtung aufweist, mit der entstehende Feuchtigkeit aus dem Ofengehäuse abgesaugt und ausgeleitet wird. Die Absaugeinrichtung kann von einem Absaugventilator gebildet sein. Eine andere Möglichkeit besteht darin, dass der Gehäuse-Deckel mit Perforationslöchern ausgebildet ist, so dass die warme Luft im Ofengehäuse nach oben steigt und durch die Perforationslöcher aus dem Ofengehäuse ausströmt.

Als vorteilhaft hat es sich erwiesen, wenn das Mikrowellen-Gerät zur Feststellung der Beladung der Gut-Halteeinrichtung eine Wägeinrichtung aufweist. Die Wägeinrichtung kann außerdem zur Leistungs-Steuerung des Mikrowellen-Gerätes dienen. Mit Hilfe der Wägeinrichtung ist es in vorteilhafter Weise auch möglich, eine Falschbeladung des erfindungsgemäßen Mikrowellen-Gerätes, z.B. mit Schinken-Käse-Toast, Kartoffeln o.dgl., zu verhindern.

Die jeweilige Mikrowellen-Strahlenquelle ist vorzugsweise von einem Magnetron gebildet, an das zur Kühlung ein Ventilator angeschlossen ist, und das jeweilige Magnetron ist vorzugsweise mittels einer Rohrleitung mit dem zylindrischen Gehäusemantel strömungstechnisch verbunden, durch die die im Magnetron erzeugte Verlustwärme in das Innere des zylindrischen Ofengehäuses eingeleitet wird. Dabei kann es zweckmäßig sein, im jeweiligen Strömungskanal eine Filtereinrichtung vorzusehen.

Eine solche Ausbildung des erfindungsgemäßen Mikrowellengerätes weist den Vorteil auf, dass die Abwärme des jeweiligen Magnetrons mit Hilfe des zugehörigen Ventilators in das Innere des zylindrischen Ofengehäuses eingeleitet werden kann, um die beim Erwärmen, insbesondere Auftauen des Guts, insbesondere Nahrungsmittel-Guts, erzeugte Feuchtigkeit mit der besagten Abwärme zu beaufschlagen und die Feuchtigkeit aus dem Inneren des zylindrischen Ofengehäuses mittels der Absaugeinrichtung abzusaugen und auszuleiten.

Die jeweilige Rohrleitung, mittels welcher das zugehörige Magnetron mit dem Gehäusemantel strömungstechnisch verbunden ist, mündet in den zylindrischen Gehäusemantel zweckmäßigerweise tangential ein.

Verwendung findet das erfindungsgemäße Mikrowellengerät vorzugsweise für zu erwärmendes, insbesondere aufzutauendes Nahrungsmittel-Gut, das eine definierte Gestalt besitzt und das in einen formstabilen Aufnahme-Hüllenkörper eingesetzt, zum Erwärmen, insbesondere Auftauen in das Mikrowellengerät eingebracht wird. Der jeweilige Aufnahme-Hüllenkörper für das zu erwärmende, insbesondere aufzutauende Gut ist vorzugsweise von einem geschmacksneutralen oder einem einen bestimmten Geschmack besitzenden Teigmaterial, insbesondere einer Waffel, wie sie ähnlich z.B. für Speise-Eis verwendet wird, gebildet.

Bei dem genannten Nahrungsmittel-Gut kann es sich bspw. um Gemüse und/oder Obst und/oder Fleisch und/oder Fisch o.dgl. handeln, das breiig und/oder kleinteilig vorbereitet und z.B. in kegelförmiger oder kegelstumpfförmiger Gestalt tiefgefroren z.B. in einem Tiefkühl-Schrank bis zum Verkauf bevorratet und gelagert wird. Entsprechend werden die formstabilen Aufnahme-Hüllenkörper aus dem Teigmaterial bis zur Verwendung, d.h. zur Kombination mit dem tiefgefrorenen Nahrungsmittel-Gut, gelagert. Zum Verkauf wird das tiefgefrorene Nahrungsmittel-Gut in einen passenden formstabilen Aufnahme-Hüllenkörper eingesetzt und anschließend wird der formstabile Aufnahme-Hüllenkörper mit dem in ihn eingesetzten, zu erwärmenden, insbesondere aufzutauenden Nahrungsmittel-Gut mit Hilfe der Gut-Halteeinrichtung in das Mikrowellengerät eingebracht und das Mikrowellengerät eingeschaltet, so dass innerhalb einer kurzen Zeitspanne von z.B. weniger als einer Minute das Nahrungsmittel-Gut mit dem Aufnahme-Hüllenkörper erwärmt, insbesondere aufgetaut wird und zum Verzehr zur Verfügung steht.

Das erfindungsgemäße Mikrowellengerät ist bspw. dazu in der Lage, tiefgefrorenes Nahrungsmittel-Gut innerhalb einer kurzen Zeitspanne von ≤ 1 Minute von -20°C auf +80°C zu erhitzen.

Weitere Einzelheiten, Merkmale und Vorteile ergeben sich aus der nachfolgenden Beschreibung eines in der Zeichnung schematisch dargestellten Ausführungsbeispieles des erfindungsgemäßen Mikrowellengerätes bzw. wesentlicher Einzelheiten desselben, wobei explizit klargestellt werden soll, dass die Größenverhältnisse in axialer und radialer Richtung des Mikrowellengerätes nicht den realen Gegebenheiten entsprechen sondern nur der Verdeutlichung der Erfindung dienen sollen.

Es zeigen:
Figur 1 eine schematische Ansicht des Mikrowellengerätes in Blickrichtung von oben,
Figur 2 eine schematische Schnittdarstellung entlang der Schnittlinie II-II in Figur 1, und
Figur 3 abschnittweise eine Schnittdarstellung des Mikrowellengerätes - ähnlich dem Schnitt gemäß Figur 2 insbesondere zur Verdeutlichung des Mikrowellen reflektierenden Kappenelementes.

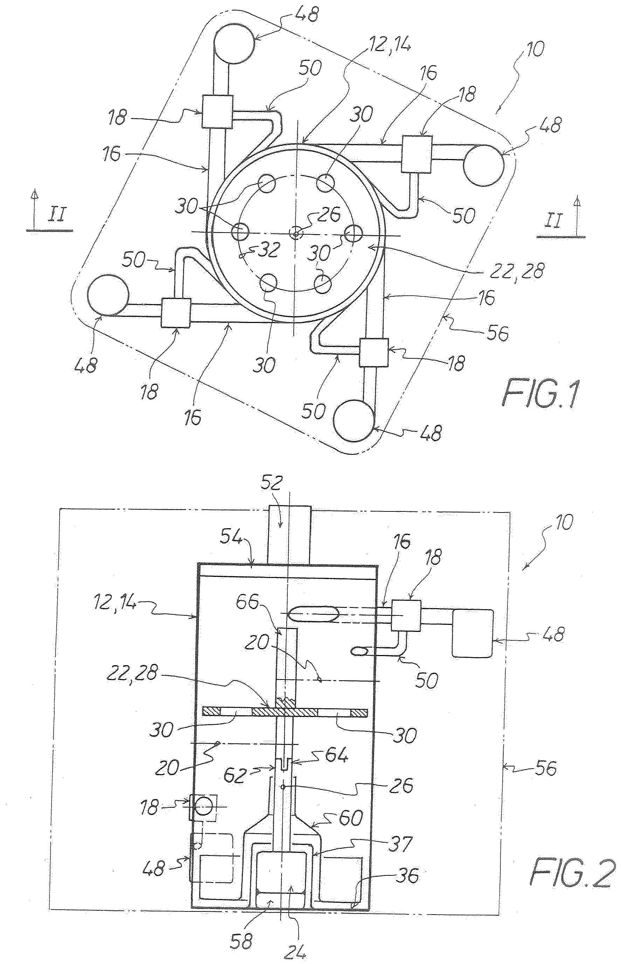

Figur 1 verdeutlicht eine Ausführungsform des Mikrowellengerätes 10, das ein Ofengehäuse 12 mit einem zylindrischen Gehäusemantel 14 aufweist. An den Gehäusemantel 14 sind eine Anzahl Mikrowellen-Kopplungselemente 16 angekoppelt, die vom zylindrischen Gehäusemantel 14 in Umfangsrichtung vorzugsweise gleichmäßig verteilt tangential wegstehen. Die Mikrowellen-Kopplungselemente 16 dienen zum Ankoppeln zugehöriger Mikrowellen-Strahlenquellen 18 an das zylindrische Ofengehäuse 12 des Mikrowellengerätes 10.

Wie aus Figur 2 ersichtlich ist, sind die Mikrowellen-Strahlenquellen 18 mittels der zugehörigen Mikrowellen-Kopplungselemente 16 gegeneinander axial äquidistant versetzt. In Figur 2 sind vier Mikrowellen-Kopplungselemente 16 verdeutlicht, wobei nur die beiden endseitigen Mikrowellen-Kopplungselemente zeichnerisch dargestellt sind. Die beiden mittleren Mikrowellen-Kopplungselemente sind nur durch strichpunktierten Linien 20 angedeutet.

Es ist für einen Fachmann verständlich, dass jede beliebige Anzahl von Mikrowellen-Strahlenquellen, abhängig von deren Leistung und dem zu beheizenden Raumvolumen zum Einsatz kommen kann.

Erfindungsgemäß ist es auch möglich, dass eine Anzahl Mikrowellen-Strahlenquellen 18 mit ihren zugehörigen Mikrowellen-Kopplungselementen 16 axial nicht versetzt sondern in einer gemeinsamen Ebene, in Umfangsrichtung verteilt, angeordnet sind.

Im zylindrischen Ofengehäuse 12 ist eine Gut-Halteeinrichtung 22 axial mittig vorgesehen, die mittels einer Antriebseinrichtung 24 um eine zentrale Achse 26 antreibbar ist.

Die Gut-Halteeinrichtung 22 weist einen Drehteller 28 auf, der insbesondere zum temporären Halten von zu erwärmendem oder tiefgefrorenem und aufzutauendem Nahrungsmittel-Gut mit Gut-Haltemitteln 30 ausgebildet ist. Die Gut-Haltemittel 30 sind entlang eines zur zentralen Achse 26 konzentrischen Teilkreises 32 äquidistant beabstandet vorgesehen. Bspw. ist der Drehteller 28 mit fünf oder mit sechs Gut-Haltemitteln 30 ausgebildet.

Die Gut-Haltemittel 30 sind bspw. als Löcher ausgebildet; sie können bspw. auch von Ausnehmungen, Aussparungen, Schlaufenelementen, Klemmelementen o.dgl. gebildet sein.

Die für die von einem Drehteller 28 gebildete Gut-Halteeinrichtung 22 vorgesehene Antriebseinrichtung 24 ist im Bereich des Bodens 36 des zylindrischen Ofengehäuses 12 angeordnet. Zu diesem Zwecke ist der Boden 36 mit einer kappenartigen Aufwölbung 37 ausgebildet.

Die Antriebseinrichtung 24 ist in dem durch die Aufwölbung 37 oberseitig begrenzten Raum angeordnet.

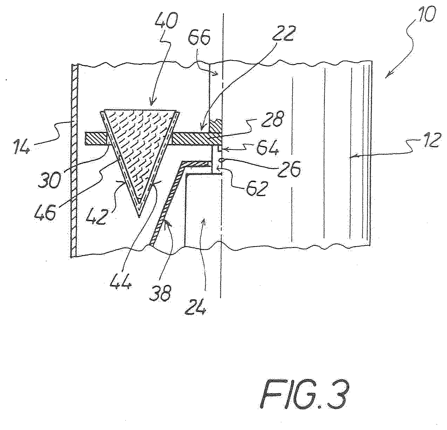

Figur 3 verdeutlicht eine Ausführungsform, wobei die von einem Motor gebildete Antriebseinrichtung 24 von einem Mikrowellen-reflektierenden Kappenelement 38 umgeben ist, so dass das zu erwärmende, insbesondere tiefgefrorene und aufzutauende Nahrungsmittel-Gut 40 nicht nur an seiner radial außen liegenden Seite 42 sondern auch an seiner radial innen liegenden Seite 44 mit Mikrowellen beaufschlagt wird, um ein gleichmäßiges und zeitlich schnelles Erwärmen, insbesondere Auftauen des Nahrungsmittel-Guts 40 zu bewirken.

Das Kappenelement 38 kann unbeweglich vorgesehen und mit einer glatten Oberfläche ausgebildet sein. Eine andere Möglichkeit besteht darin, dass das Kappenelement 38 um die zentrale Achse 26 drehbar vorgesehen und zur zerstreuenden Mikrowellen-Reflexion mit einer nicht glatten, d.h. gerippten, genoppten, gewellten und/oder eingedellten Oberfläche ausgebildet ist.

Wie aus Figur 3 des Weiteren deutlich ersichtlich ist, besitzt das zu erwärmende, insbesondere aufzutauende Nahrungsmittel-Gut 40 bspw. eine kegelförmige Gestalt und ist in einen konformen formstabilen Aufnahme-Hüllenkörper 46 eingesetzt. Der jeweilige formstabile Aufnahme-Hüllenkörper 46 besteht aus einem essbaren, geschmacksneutralen oder einen Geschmack besitzenden Teigmaterial, so dass das Nahrungsmittel-Gut 40 nach dem Auftauen und dem Entnehmen aus dem Mikrowellengerät 10 gemeinsam mit dem Aufnahme-Hüllenkörper 46 verspeist werden kann.

Der Aufnahme-Hüllenkörper 46 kann bspw. von einer Waffel gebildet sein, wie sie bislang zum Verspeisen von Speise-Eisportionen verwendet wird.

Die Figuren 1 und 2 verdeutlichen außerdem, dass die jeweilige, von einem Magnetron gebildete Mikrowellen-Strahlenquelle 18 zu ihrer Kühlung mit einem Ventilator 48 verbunden ist. Die jeweilige Mikrowellen-Strahlenquelle 18 ist außerdem mittels einer Rohrleitung 50 mit dem zylindrischen Gehäusemantel 14 strömungstechnisch verbunden; die jeweilige Rohrleitung 50 mündet in das Innere 34 des zylindrischen Ofengehäuses 14 tangential orientiert ein. Durch die Rohrleitungen 50 wird die in den Mikrowellen-Strahlenquellen 18 erzeugte Verlustwärme in das Innere 34 des zylindrischen Ofengehäuses 12 eingeleitet, um die beim Erwärmen, insbesondere Auftauen von tiefgefrorenem Nahrungsmittel-Gut 40 erzeugte Feuchtigkeit zu erhitzen und mittels einer Absaugeinrichtung 52 aus dem Mikrowellen-Gerät 10 abzusaugen. Die von einem Ventilator gebildete Absaugeinrichtung 52 ist am Gehäuse-Deckel 54 des zylindrischen Ofengehäuses 12 des Mikrowellen-Gerätes 10 angeordnet.

Der Gehäuse-Deckel 54 ist vorzugsweise mit einer Schutzeinrichtung gegen Leckstrahlung ausgebildet, die in Abhängigkeit von der Ofenbeladung als λ/4- oder λ/2-Drossel ausgebildet ist.

In den Figuren 1 und 2 ist ein Gerätegehäuse 56 durch eine dünne strichpunktierte Linie angedeutet.

Figur 2 verdeutlicht außerdem schematisch eine Wägeinrichtung 58, die der Antriebseinrichtung 24 zugeordnet ist. Mit Hilfe der Wägeinrichtung 58 ist es in vorteilhafter Weise möglich, die Beladung der Gut-Halteeinrichtung 22 festzustellen und die Leistung des Mikrowellen-Geräts 10 in Abhängigkeit von der jeweiligen Beladung zu steuern. Die Wägeinrichtung 58 ist außerdem dazu geeignet, den Betrieb des Mikrowellen-Gerätes 10 bei einer Falschbeladung - z.B. mit Schinken-Käse-Toast, Kartoffeln o.dgl. - zu verhindern.

In Figur 2 ist ferner eine im Ofengehäuse 12 herausnehmbar angeordnete Sammeleinrichtung 60 gezeichnet, die dazu dient, Feuchtigkeit und/oder Schmutzpartikel zu sammeln. Nach der Herausnahme der Sammeleinrichtung 60 aus dem Ofengehäuse 12 kann diese gereinigt werden, um Schmutzpartikel und/oder Feuchtigkeit von der Sammeleinrichtung 60 zu entfernen. Die Reinigung kann manuell oder maschinell z.B. mittels einer Geschirrspülmaschine erfolgen.

Der Drehteller 28 ist mit der Antriebswelle 62 der Antriebseinrichtung 24 mittels einer Formschlussverbindung 64 loslösbar gekoppelt. Der Drehteller 28 weist einen stabförmigen Griff 66 auf, mit dem der Drehteller 28 von der Formschlussverbindung trennbar und aus dem Ofengehäuse 12 entnehmbar ist, sobald der Gehäuse-Deckel 52 zum Öffnen des Ofengehäuses 12 betätigt, d.h. bspw. aufgeschwenkt worden ist.

**Bezugsziffernliste:**

| | |
|---|---|
| 10 | Mikrowellengerät (für 40) |
| 12 | zylindrisches Ofengehäuse (von 10) |
| 14 | zylindrischer Gehäusemantel (von 12) |
| 16 | Mikrowellen-Kopplungselement (von 10 an 14 für 18) |
| 18 | Mikrowellen-Strahlenquelle (von 10) |
| 20 | strichpunktierte Linie (für 16, 18) |
| 22 | Gut-Halteeinrichtung (von 10 in 12) |
| 24 | Antriebseinrichtung (für 22) |
| 26 | zentrale Achse (von 10) |
| 28 | Drehteller (von 22) |
| 30 | Gut-Haltemittel (von 28 an 32) |
| 32 | Teilkreis |
| 36 | Gehäuseboden (von 12) |
| 37 | Aufwölbung (von 36 für 24) |
| 38 | Mikrowellen-reflektierendes Kappenelement (von 10 für 24) |
| 40 | zu erwärmendes, insbesondere aufzutauendes Gut |
| 42 | radiale Außenseite (von 40) |
| 44 | radiale Innenseite (von 40) |
| 46 | formstabiler Aufnahme-Hüllenkörper (für 40) |
| 48 | Ventilator (für 18) |
| 50 | Rohrleitung (zwischen 18 und 14) |
| 52 | Absaugventilator (von 10 an 12 bzw. 54) |
| 54 | Gehäusedeckel (von 12) |
| 56 | Gerätegehäuse (von 10) |
| 58 | Wägeinrichtung (von 10) |
| 60 | Sammeleinrichtung (in 12) |
| 62 | Antriebswelle (von 24 für 30) |
| 64 | Formschlussverbindung (bei 26) |
| 66 | Griff (an 28) |

## Patentansprüche

1. Mikrowellengerät (10) umfassend:
Ein Ofengehäuse (12), an dessen Gehäusemantel (14) wenigstens zwei Mikrowellen-Strahlenquellen (18) mittels jeweils eines Mikrowellen-Kopplungselementes (16) angekoppelt sind, wobei jedes Mikrowellen-Kopplungselement (16) vom Gehäusemantel (14) in Umfangsrichtung verteilt wegsteht, und im Ofengehäuse (12) mindestens eine Gut-Halteeinrichtung (22) für das zu erwärmende Gut (40) vorgesehen ist, die mittels einer Antriebseinrichtung (24) um eine Achse (26) drehbar ist, wobei die mindestens eine Gut-Halteeinrichtung (40) von einem Drehteller (28) gebildet ist, der zum, positionsgenauen Halten des zu erwärmenden, insbesondere aufzutauenden Guts (40) vorgesehen ist,
**gekennzeichnet dadurch, dass**
der Drehteller (28) mit Gut-Haltemitteln (30) ausgebildet ist, die entlang mindestens eines zur zentralen Achse (26) konzentrischen Teilkreises (32) äquidistant beabstandet vorgesehen sind,
dass die Gut-Haltemittel (30) von Löchern, Ausnehmungen, Aussparungen, Schlaufenelementen und/oder Klemmelementen gebildet sind,
dass das Ofengehäuse (12) zylindrisch ist und einen Gehäusedeckel (54) mit einer Absaugeinrichtung (52) aufweist,
dass die jeweiligen Mikrowellen-Strahlenquellen (18) von Magnetronen gebildet sind, zu deren Kühlung Ventilatoren (48) angeschlossen sind, dass die Magnetronen mittels Rohrleitungen (50) mit dem zylindrischen Gehäusemantel (14) strömungstechnisch verbunden sind, dass die Magnetronen mit ihren Mikrowellen-Kopplungs-Elementen (16) am Gehäusemantel (14) des Ofengehäuses (12) axial versetzt zueinander vorgesehen sind, und dass die Rohrleitungen in das zylindrische Ofengehäuse (14) axial versetzt zueinander einmünden.

2. Mikrowellengerät nach Anspruch 1,
**dadurch gekennzeichnet,**
**dass** drei oder vier Mikrowellen-Strahlenquellen (18) mit ihren Mikrowellen-Kopplungs-Elementen (16) am Gehäusemantel (14) des Ofengehäuses (12) axial versetzt zueinander vorgesehen sind.

3. Mikrowellengerät nach Anspruch 1 oder 2
**dadurch gekennzeichnet,**
**dass** der Gehäusemantel (14) des Ofengehäuses (12) zum Verhindern einer Kondenswasserbildung eine Heizeinrichtung aufweist.

4. Mikrowellengerät nach einem der Ansprüche 1 bis 3,
**dadurch gekennzeichnet,**
**dass** das Ofengehäuse zylindrisch ist und dass der Drehteller (28) zum Bestücken mit zu erwärmendem, insbesondere aufzutauendem Gut (40) aus dem zylindrischen Ofengehäuse (12) entnehmbar ist.

5. Mikrowellengerät nach einem der Ansprüche 1 bis 4,
**dadurch gekennzeichnet,**
**dass** die jeweilige Mikrowellen-Kopplungseinrichtung (16) von einem Hohlleiter gebildet ist.

6. Mikrowellengerät nach Anspruch 1,
**dadurch gekennzeichnet,**
**dass** die Gut-Haltemittel (30) mit voneinander beabstandeten, partiellen Kontaktflächen ausgebildet sind, um zwischen dem Drehteller (28) und dem zu erwärmenden, insbesondere aufzutauenden Gut (40) eine Ableitung von Dampf und/oder Feuchtigkeit zu ermöglichen.

7. Mikrowellengerät nach einem der Ansprüche 1 bis 6,
**dadurch gekennzeichnet,**
**dass** im Ofengehäuse (12) zum Sammeln von Feuchtigkeit und/oder Schmutzpartikeln eine Sammeleinrichtung (60) aus Mikrowellen-durchlässigem Material herausnehmbar vorgesehen ist.

8. Mikrowellengerät nach einem der Ansprüche 1 bis 7,
**dadurch gekennzeichnet,**
**dass** die für die mindestens eine Halteeinrichtung (22) vorgesehene Antriebseinrichtung (24) im Bereich des Bodens (36) des zylindrischen Ofengehäuses (12) angeordnet ist.

9. Mikrowellengerät nach Anspruch 8,
**dadurch gekennzeichnet,**
**dass** die Antriebseinrichtung (24) von einem Mikrowellen-reflektierenden Kappenelement (38) umgeben ist, und/oder
**dass** das Mikrowellen-Gerät (10) zur Feststellung der Beladung der Gut-Halteeinrichtung (30) eine Wägeinrichtung (58) aufweist.

10. Mikrowellengerät nach Anspruch 9,
**dadurch gekennzeichnet,**
**dass** das Kappenelement (38) unbeweglich vorgesehen ist und/oder dass das Kappenelement (38) um die zentrale Achse (26) drehbar vorgesehen und zur zerstreuenden Mikrowellen-Reflexion mit einer nicht glatten, gerippten, genoppten, gewellten und/oder eingedellten Oberfläche ausgebildet ist.

11. Mikrowellengerät nach einem der Ansprüche 1 bis 10,
**dadurch gekennzeichnet,**
**dass** der Gehäusedeckel (54) eine Schutzeinrichtung gegen Leckstrahlung aufweist.

12. Verwendung des Mikrowellengeräts nach einem der vorhergehenden Ansprüche für zu erwärmendes, insbesondere aufzutauendes Nahrungsmittel-Gut (40), das eine definierte Gestalt besitzt und das in einen konformen Aufnahme-Hüllenkörper (46) eingesetzt, zum Erwärmen, insbesondere Auftauen in das Mikrowellengerät (10) eingebracht wird.

13. Verwendung nach Anspruch 12, wobei der jeweilige Aufnahme-Hüllkörper (46) für das zu erwärmende, insbesondere aufzutauende Gut (40) von einem geschmacksneutralen oder einem einen bestimmten Geschmack besitzenden Teigmaterial, insbesondere einer Waffel, gebildet ist.

## Claims

1. A microwave apparatus (10) comprising:
an oven housing (12) to the housing shell (14) of which at least two microwave radiation sources (18) are coupled respectively by means of a microwave coupling element (16), wherein each microwave coupling element (16) protrudes from the housing shell (14) circumferentially spaced, and at least one material holding device (22) for the material (40) to be heated is provided in the oven housing (12) which can be rotated about an axis (26) using a driving device (24), the at least one material holding device (40) being formed by a turntable (28) which is provided for holding the material (40) to be heated, in particular to be thawed, with high position accuracy,
**characterized in that**
the turntable (28) is formed with material retaining means (30) which are provided equidistantly spaced along at least one divided circle (32) concentric with the central axis (26),
**in that** the material-retaining means (30) are formed by holes, indentations, recesses, loop elements and/or clamping elements,
**in that** the oven housing (12) is cylindrical and has a housing cover (54) with an exhaust device (52),
**in that** the respective microwave radiation sources (18) are formed by magnetrons for the cooling of which fans (48) are provided, **in that** the magnetrons are fluidically connected to the cylindrical housing shell (14) by means of pipes (50), **in that** the magnetrons with their microwave coupling elements (16) are provided on the housing shell (14) of the oven housing (12) axially offset with respect to each other, and **in that** the pipes open into the cylindrical oven housing (14) axially offset with respect to each other.

2. The microwave apparatus of claim 1,
**characterized in that**
three or four microwave radiation sources (18) with their microwave coupling elements (16) are provided on the housing shell (14) of the oven housing (12) axially offset with respect to each other.

3. The microwave apparatus according to claim 1 or 2
**characterized in that**
the housing shell (14) of the oven housing (12) comprises a heating device for preventing condensation of water.

4. The microwave apparatus according to any one of claims 1 to 3,
**characterized in that**
the oven housing is cylindrical and **in that** the turntable (28) can be removed from the cylindrical oven housing (12) for loading with material (40) to be heated, in particular material to be thawed.

5. The microwave apparatus according to any one of claims 1 to 4,
**characterized in that**
the respective microwave coupling device (16) is formed by a waveguide.

6. The microwave apparatus of claim 1,
**characterized in that**
the material-retaining means (30) define surfaces for partial contact spaced apart from each other in order to allow steam and/or moisture to be discharged between the turntable (28) and the material (40) to be heated, in particular to be thawed.

7. The microwave apparatus according to any one of claims 1 to 6,
**characterized in that**
a collecting device (60) made of microwave-permeable material is removably provided in the oven housing (12) for collecting moisture and/or dirt particles.

8. The microwave apparatus according to any one of claims 1 to 7,
**characterized in that**
the driving device (24) provided for the at least one holding device (22) is arranged in the region of the bottom (36) of the cylindrical oven housing (12).

9. The microwave apparatus of claim 8,
**characterized in that**
the driving device (24) is surrounded by a microwave-reflecting cap element (38), and/or
the microwave apparatus (10) has a weighing device (58) for determining the loading of the material-holding device (30).

10. The microwave apparatus of claim 9,
**characterized in that**
the cap element (38) is stationary and/or
the cap element (38) is provided rotatably about the central axis (26) and is formed with a non-smooth, ribbed, nubbed, corrugated and/or dented surface for scattered microwave reflection.

11. The microwave apparatus according to any one of claims 1 to 10,
**characterized in that**
the housing cover (54) has a protection device against stray radiation.

12. Use of the microwave apparatus according to any one of the preceding claims for food material (40) to be heated, in particular to be thawed, which has a defined shape and which, being inserted into a matching receiving enveloping body (46), is introduced into the microwave apparatus (10) for heating, in particular thawing.

13. The use according to claim 12, wherein the respective receiving enveloping body (46) for the material (40) to be heated, in particular to be thawed, is formed by a tasteless dough material or a dough material having a specific taste, in particular a wafer.

## Revendications

1. Appareil à micro-ondes (10) comprenant :
un boîtier de four (12) sur l'enveloppe de boîtier (14) duquel sont accouplées au moins deux sources de rayonnement de micro-ondes (18) au moyen chaque fois d'un élément de couplage de micro-ondes (16), dans lequel chaque élément de couplage de micro-ondes (16) de l'enveloppe de boîtier (14) est espacé de manière répartie en direction circonférentielle, et au moins un dispositif de maintien de produit (22) pour le produit à chauffer (40) est pourvu dans le boîtier de four (12) de manière à pouvoir tourner autour d'un axe (26) au moyen d'un dispositif d'entraînement (24), dans lequel ledit au moins un dispositif de maintien de produit (40) est constitué d'un plateau tournant (28) qui est pourvu pour un maintien de position précis du produit (40) à réchauffer, et en particulier à décongeler,
**caractérisé**
**en ce que** le plateau tournant (28) est constitué de moyens de maintien de produit (30) qui sont disposés avec un espacement équidistant le long d'au moins un cercle primitif (32) concentrique avec l'axe central (26),
**en ce que** les moyens de maintien de produit (80) sont constitués de trous, de cavités, d'encoches, d'éléments de sangle et/ou d'éléments de pince,
**en ce que** le boîtier de four (12) est cylindrique et comporte un couvercle de boîtier (54) avec un dispositif d'aspiration (52),
**en ce que** lesdites sources de rayonnement de micro-ondes (18) sont constituées de magnétrons auxquels sont connectés des ventilateurs (48) pour assurer leur refroidissement, en ce que les magnétrons sont en connexion fluidique avec l'enveloppe de boîtier cylindrique (14) au moyen de conduits (50), en ce que les magnétrons avec leurs éléments de couplage de micro-ondes (16) sont pourvus sur l'enveloppe de boîtier (14) du boîtier de four (12) avec un décalage axial entre eux, et en ce que les conduits débouchent dans le boîtier de four cylindrique (14) avec un décalage axial entre eux.

2. Appareil à micro-ondes selon la revendication 1,
**caractérisé**
**en ce que** trois ou quatre sources de rayonnement de micro-ondes (18) sont pourvues avec leurs éléments de couplage de micro-ondes (16) sur l'enveloppe de boîtier (14) du boîtier de four (12) avec un décalage axial entre elles.

3. Appareil à micro-ondes selon la revendication 1 ou 2,
**caractérisé**
**en ce que** l'enveloppe de boîtier (14) du boîtier de four (12) comporte un dispositif de chauffage afin d'éviter la formation d'eau de condensation.

4. Appareil à micro-ondes selon l'une des revendications 1 à 3,
**caractérisé**
**en ce que** le boîtier de four est cylindrique et en ce que le plateau tournant (28) peut être extrait du boîtier de four cylindrique (12) afin de pouvoir le charger de produits (40) à réchauffer, et en particulier à décongeler.

5. Appareil à micro-ondes selon l'une des revendications 1 à 4,
**caractérisé**
**en ce que** chaque dispositif de couplage de micro-ondes (16) est constitué d'un guide d'ondes.

6. Appareil à micro-ondes selon la revendication 1,
**caractérisé**
**en ce que** les moyens de maintien de produit (30) sont constitués de surfaces de contact partielles espacées entre elles, afin de permettre une évacuation de la vapeur et/ou de l'humidité entre le plateau tournant (28) et le produit (40) à réchauffer, et en particulier à décongeler.

7. Appareil à micro-ondes selon l'une des revendications 1 à 6,
**caractérisé**
**en ce qu'**un dispositif collecteur (60) en matériau transparent aux micro-ondes est pourvu de manière amovible dans le boîtier de four (12) pour collecter l'humidité et/ou les particules de saleté.

8. Appareil à micro-ondes selon l'une des revendications 1 à 7,
**caractérisé**
**en ce que** le dispositif d'entraînement (24) pourvu pour ledit au moins un dispositif de maintien (22) est agencé dans la section du fond (36) du boîtier de four cylindrique (12).

9. Appareil à micro-ondes selon la revendication 8,
**caractérisé**
**en ce que** le dispositif d'entraînement (24) est entouré d'un élément de capot qui réfléchit les micro-ondes (88), et/ou
**en ce que** l'appareil à micro-ondes (10) comporte un dispositif de pesage (58) pour déterminer la charge du dispositif de maintien de produit (30).

10. Appareil à micro-ondes selon la revendication 9,
**caractérisé**
**en ce que** l'élément de capot (38) est pourvu de manière inamovible, et/ou
**en ce que** l'élément de capot (38) est pourvu de manière à pouvoir tourner autour de l'axe central (26) et comporte une surface rugueuse, nervurée, noueuse, ondulée et/ou bosselée pour procurer une réflexion dispersante des micro-ondes.

11. Appareil à micro-ondes selon l'une des revendications 1 à 10,
**caractérisé**
**en ce que** le couvercle de boîtier (54) comporte un dispositif de protection contre les fuites de rayonnement.

12. Utilisation de l'appareil à micro-ondes selon l'une des revendications précédentes pour un produit alimentaire (40) à réchauffer, et en particulier à décongeler, qui présente une forme définie et est placé dans l'appareil à micro-ondes (10) inséré dans un corps enveloppant de réception correspondant (46) pour être chauffé, et en particulier décongelé.

13. Utilisation selon la revendication 12, dans laquelle ledit corps enveloppant de réception (46) pour le produit (40) à réchauffer, et en particulier à décongeler, est constitué d'un matériau pâteux, en particulier une gaufre, ayant un goût neutre ou un goût déterminé.
